# EUROPÄISCHE PATENTSCHRIFT

(11) **EP 2 161 120 B1**
(45) Veröffentlichungstag und Bekanntmachung des Hinweises auf die Patenterteilung: **11.10.2017**
(21) Anmeldenummer: 09010710.3
(22) Anmeldetag: 20.08.2009
(51) Int. Cl.: B30B 11/00, B30B 11/08, B29C 47/92

(54) **Verfahren zum Prüfen von Mehrschichttabletten in einer Mehrfachrundläuferpresse**
Method for inspecting multiple-layer tablets in a rotary press
Procédé de contrôle de comprimés multicouches dans une presse rotative

(30) Priorität: 09.09.2008 DE 102008046422
(43) Veröffentlichungstag der Anmeldung: 10.03.2010
(73) Patentinhaber: Fette GmbH, 21493 Schwarzenbek (DE)
(72) Erfinder: Naeve, Jan, 23899 Kehrsen (DE); Lüdemann, Stefan, 21031 Hamburg (DE)
(74) Vertreter: Hauck Patentanwaltspartnerschaft mbB

(56) Entgegenhaltungen:
- GB-A- 936 684
- DATABASE WPI Section Ch, Week 198240 Thomson Scientific, London, GB; Class B07, AN 1982-85416E XP002629928, -& SU 887 263 A1 (ZHDANOVSKIJ SP PK B MED PROMY [SU]) 7. Dezember 1981 (1981-12-07)

## Beschreibung

Die Erfindung betrifft ein Verfahren zum Prüfen von Mehrschichttabletten in einer Mehrfachrundläuferpresse, in der Matrizenlöcher einer umlaufenden Matrizenscheibe in aufeinander folgenden Fülleinrichtungen sukzessive mit Tablettenmaterial unterschiedlicher Schichten befüllt werden, und das Tablettenmaterial in den Fülleinrichtungen jeweils zugeordneten Pressstationen mittels synchron umlaufender Pressstempel Schicht auf Schicht zu Presslingen mit n Schichten verpresst wird und die Presslinge anschließend in einer Entnahmestation ausgeworfen und entnommen werden, und bei dem in einem Prüfvorgang Presslinge mit m Schichten nach dem Verpressen in einer Entnahmestation entnommen und einer Prüfstation zugeleitet werden, wobei 1 <= m < n ist.

Rundlaufpressen zur Herstellung von Tabletten aus den verschiedensten Stoffen und für die verschiedensten Anwendungszwecke sind allgemein bekannt. Eine um eine zumeist vertikale Achse angetriebene Matrizenscheibe weist dazu auf einem Kreis angeordnete Matrizen auf, denen synchron mit der Scheibe umlaufende Pressstempelpaare zugeordnet sind. Die Betätigung der Pressstempel erfolgt durch Steuerkurven und Druckrollen. Während der Befüllung der Matrizenbohrungen mit dem üblicherweise pulverförmigen Tablettenmaterial mittels einer geeigneten Füllvorrichtung bildet der Unterstempel eines Paars den Boden eines Formnestes, wobei seine Höhe in der Matrize die Dosierung vorgibt. Anschließend erfolgt durch aufeinander zu bewegen der gegenüberliegenden Pressstempel in einer Pressstation das Verpressen des Tablettenmaterials auf eine gewünschte Dicke (Steghöhe). Die Pressstation weist in der Regel eine Vordruck- und eine Hauptdruckstation auf. Im Anschluss an das Verdichten schieben die Unterstempel, gesteuert durch eine Auswerferkurve, an einer bestimmten Stelle der Maschine die Tabletten aus der Matrize aus, während sich die gegenüberliegende Stempelreihe (Oberstempel) allmählich von der Matrizenscheibe entfernt. Dadurch kann ein Abstreifer die ausgeworfenen Presslinge von der Matrizenscheibe abstreifen und einem Ablaufkanal zuführen.

Zur Herstellung von Tabletten aus zwei oder mehr Schichten mit einer Rundläuferpresse der genannten Art sind die jeweils beschriebenen Stationen entsprechend der Anzahl der vorgesehenen Schichten mehrfach vorgesehen. Dabei wird zunächst eine erste Schicht in einer ersten Fülleinrichtung eingefüllt und mittels der Pressstempel leicht verdichtet. Durch die Rotation der Matrizenscheibe gelangt das mit der ersten Schicht befüllte Matrizenloch dann zu einer nachfolgenden Fülleinrichtung, in der die zweite Schicht über der ersten Schicht eingefüllt wird. Diese zweite Schicht wird dann wiederum leicht verdichtet. Dieser Vorgang wird so lange wiederholt, bis die letzte Schicht der herzustellenden Tablette (die n-te Schicht) in das Matrizenloch gefüllt wurde. Nach Befüllung mit der letzten Schicht erfolgt die Verpressung zu einer Mehrschichttablette mit anschließender Entnahme aus der Vorrichtung, wie erläutert.

Es besteht die Notwendigkeit, unter anderem das Gewicht der hergestellten Tabletten zu prüfen und gegebenenfalls eine Korrektur vorzunehmen. Daher können bei der Presse ein oder mehrere Ablaufkanäle mit Ablaufweichen vorgesehen sein, die ankommende Tabletten wahlweise in Richtung einer Prüfstation lenken. Prüfstationen, in denen die Prüfvorgänge, beispielsweise Gewichtsmessungen, automatisch durchgeführt werden, sind ebenfalls bereits bekannt. Um bei einer Mehrschichttablette bei einer Abweichung von einem Sollgewicht feststellen zu können, welche der Schichten fehlerhaft ist, besteht die Notwendigkeit, das Gewicht einzelner Schichten der Tablette zu prüfen. Ein entsprechendes Prüfverfahren für eine Zweischichttablette ist beispielsweise bekannt aus DE 42 18 122 C1 oder SU 887 263. Dabei werden in einem Prüfvorgang Presslinge mit der ersten Schicht nach dem Verpressen entnommen und einer Prüfstation zugeleitet, wo das Gewicht der ersten Schicht gemessen wird. In der SU 887 263 wird vorgeschlagen, nachfolgend zu einer zweiten Befüllvorrichtung der Rundläuferpresse das in der zweiten Befüllvorrichtung in die Matrizenlöcher gefüllte Material mittels einer Absaugvorrichtung abzusaugen. Um das Auswerfen des Presslings aus nur einer Schicht zu erleichtern, und um zu verhindern, dass sich unverpresstes Material auf der Matrizenscheibe und im übrigen Bereich der Presse ansammelt, wurde in DE 42 18 122 C1 vorgeschlagen, vor der Entnahme für eine Prüfung die erste Schicht des Presslings stärker zu komprimierten als dies während der normalen Fertigung der Mehrschichttablette der Fall ist.

Dabei besteht ein Problem darin, dass sich durch die stärkere Komprimierung,die Kräfteverhältnisse und damit das Schwingungsverhalten der Tablettenpresse verändern. Dies wiederum führt zu einer veränderten Befüllung der Matrizenlöcher und somit zu veränderten Schichtgewichten. Das gemessene Gewicht von unter diesen Bedingungen gezogenen Schichtmustern ist daher nicht immer repräsentativ für die im Normalbetrieb mit der Anlage erzeugten Tabletten. Gemäß der ebenfalls auf die Anmelderin zurückgehenden Anmeldung mit dem Aktenzeichen 10 2007 061081.7 wird dieses Problem gelöst, indem mittels einer nach der m-ten Pressstation und vor der nachfolgenden m+1-ten Fülleinrichtung angeordneten Entnahmestation Presslinge mit m Schichten für die Prüfung entnommen werden. Dabei werden der Prüfstation nur solche Presslinge zugeführt, die zum Zeitpunkt der Einleitung des Prüfvorgangs bereits vollständig mit Material der m-ten Schicht befüllt waren, also die m-te Fülleinrichtung bereits verlassen hatten. Auf diese Weise werden nur repräsentativ befüllte Schichtmuster geprüft. Bei dieser Vorgehensweise ist allerdings die Anzahl der Schichtmuster, die für eine Prüfung zur Verfügung steht, verhältnismäßig gering, da nur Presslinge zwischen der m-ten Fülleinrichtung und der nach der m-ten Pressstation und vor der m+1-ten Fülleinrichtung angeordneten Entnahmestation verwendbar sind.

Ausgehend von dem erläuterten Stand der Technik liegt der Erfindung die Aufgabe zu Grunde bei einem Verfahren der eingangs genannten Art repräsentative Schichtmuster ohne Beeinflussung durch den Vorgang des Musterziehens zu erzeugen, wobei die Anazahl der für die Prüfung verwendbaren Schichtmuster erhöht ist.

Diese Aufgabe wird gemäß der Erfindung durch den Gegenstand von Anspruch 1 gelöst. Vorteilhafte Ausgestaltungen finden sich in den abhängigen Ansprüchen sowie der Beschreibung und den Figuren.

Für ein Verfahren der eingangs genannten Art löst die Erfindung die Aufgabe dadurch, dass nach Einleitung des Prüfvorgangs Matrizenlöcher mit Presslingen mit m Schichten nach dem Verpressen der m-ten Schicht die m+1-te Fülleinrichtung durchlaufen und dort Tablettenmaterial der m+1-ten Schicht auf die in den Matrizenlöcher befindlichen Presslinge gefüllt wird, dass das Tablettenmaterial der m+1-ten Schicht anschließend mittels einer nach der m+1-ten Fülleinrichtung und vor der m+1-ten Pressstation angeordneten Absaugeinrichtung aus den die Presslinge mit m Schichten enthaltenen Matrizenlöchern abgesaugt wird, und dass der Prüfstation nur Presslinge aus Matrizenlöchern zugeführt werden, welche sich zum Zeitpunkt der Einleitung des Prüfvorgangs zwischen der m-ten Fülleinrichtung und der Absaugeinrichtung befinden.

Die Absaugeinrichtung kann eine Absaugdüse aufweisen. Die Absaugeinrichtung wird mit Einleitung des Prüfvorgangs aktiviert und nach Ende des Prüfvorgangs wieder deaktiviert. Der Prüfvorgang wird eingeleitet zu dem Zeitpunkt, zu dem die Presse ihre normalen Betriebsbedingungen verlässt. Dies kann beispielsweise die Einleitung einer ersten Komprimierung einer Tablettenschicht sein, die stärker erfolgt als beim normalen Anlagenbetrieb. Die Einleitung des Prüfvorgangs kann auch durch eine Abbremsung der Matrizenscheibe zu Beginn des Prüfvorgangs erfolgen. Das Ende des Prüfvorgangs ist entsprechend dann erreicht, wenn die Presse wieder ihre normalen Betriebsbedingungen eingenommen hat, also beispielsweise die zur Beendigung des Prüfvorgangs abgebremste Matrizenscheibe wieder auf ihre normale Rotationsgeschwindigkeit gebracht wird und/oder die Komprimierung der Tablettenschichten wieder gemäß dem normalen Anlagenbetrieb erfolgt.

Im Gegensatz zum Stand der Technik werden die zu prüfenden Presslinge erfindungsgemäß also noch durch die der m-ten Fülleinrichtung nachfolgende Fülleinrichtung geführt. Zu diesem Zeitpunkt befinden sich die Presslinge, wie beim normalen Betrieb, noch in den Matrizenlöchern und das Tablettenmaterial der m+1-ten Schicht wird auf die Presslinge aufgefüllt. Mit der Absaugeinrichtung wird dann nur das Tablettenmaterial der m+1-ten Schicht abgesaugt, während der Pressling mit m Schichten in dem Matrizenloch verbleibt. Nach Durchlaufen der m+1-ten Fülleinrichtung und der zugeordneten Absaugeinrichtung befinden sich in den Matrizenlöchern also wiederum nur die Presslinge mit m Schichten. Erfindungsgemäß können somit sämtliche Presslinge der Prüfstation zugeführt werden, die sich zwischen der m-ten Fülleinrichtung und der Absaugeinrichtung der m+1-ten Fülleinrichtung befinden. Gegenüber dem Stand der Technik steht somit eine erhöhte Anzahl von Schichtmustern zur Verfügung. In der Praxis können so mehr als doppelt so viele Schichtmuster erreicht werden. Folglich basiert die Prüfung, beispielsweise eine Gewichtsmessung und möglicherweise -regelung, auf einer höheren Anzahl von Mustern. Die statistische Genauigkeit der Prüfung und gegebenenfalls Regelung ist somit erhöht.

Sofern Presslinge mit m Schichten geprüft werden sollen, werden die Presslinge bis zum Erreichen der m-ten Fülleinrichtung in normaler Weise Schicht auf Schicht hergestellt. Es ist jedoch auch möglich, an einer ersten Pressstation eine erste Tablettenschicht für eine Prüfung zu ziehen, an einer zweiten Pressstation die erste und zweite Schicht gemeinsam zu ziehen, an einer dritten Pressstation die erste, zweite und dritte Schicht gemeinsam für einen Prüfvorgang zu ziehen usw. Für weitere Schichten kann analog vorgegangen werden. Die Gewichte der einzelnen Schichten können dann durch Bildung der Differenz der jeweils gemessenen Gewichte ermittelt werden. So ergibt sich beispielsweise das Gewicht der zweiten Tablettenschicht aus dem Gewicht des zweischichtigen Musters abzüglich eines zuvor gemessenen Gewichts der ersten Schicht.

Eine oder mehrere der Pressstationen können eine Vordruck- und Hauptdruckstation aufweisen. Sofern eine Vordruckstation vorhanden ist, bedeutet die Anordnung der Absaugeinrichtung vor einer Pressstation die Anordnung vor der Vordruckstation. An der Entnahmestation kann ein Abstreifer vorgesehen sein, der die Presslinge einem Entnahmekanal zuführt. Dieser wiederum kann zur Prüfstation führen. Das Tablettenmaterial ist üblicherweise pulverförmig. Gemäß einer besonders praxisgemäßen Ausgestaltung kann in der Prüfstation das Gewicht der Presslinge gemessen werden.

Die Matrizenscheibe kann zur Einleitung des Prüfvorgangs und/oder zur Beendigung des Prüfvorgangs angehalten werden. Somit können in einfacher Weise die Parameter für den Prüfvorgang eingestellt werden, beispielsweise die Steghöhe angepasst werden, ohne dass während des Anpassungsvorgangs unnötig weitere Presslinge verpresst werden, die anschließend aussortiert werden müssten. Anschließend kann die Matrizenscheibe sukzessive solange weitergedreht werden, bis sämtliche zu prüfenden Presslinge entnommen wurden. Nach Abschluss des Probenzugs kann der Rotor mit der Matrizenscheibe wieder angehalten werden, sodass die Anlage wieder auf ihre normalen Produktionsparameter eingestellt werden kann. Anschließend kann der Rotor beschleunigt werden und die normale Tablettenproduktion fortgesetzt werden. Auf diese Weise wird der Ausschuss minimiert.

Die Prüflinge können in einer der m+1-ten Absaugeinrichtung nachgeordneten Entnahmestation ausgeworfen und entnommen werden. Diese Entnahmestation kann vor einer nachfolgenden m+2-ten Fülleinrichtung angeordnet sein, also insbesondere der m+1-ten Pressstation direkt nachgeordnet sein. Es ist jedoch auch möglich, während des Prüfvorgangs Tablettenmaterial aus sämtlichen der m+1-ten Fülleinrichtung nachfolgenden Fülleinrichtungen mittels den Fülleinrichtungen jeweils zugeordneten Absaugeinrichtungen abzusaugen. Die Absaugeinrichtungen können dabei insbesondere jeweils zwischen der jeweiligen Fülleinrichtung und Pressstation angeordnet sein. Bei dieser Ausgestaltung ist es möglich, die Prüflinge mit m Schichten in einer der n-ten Pressstation nachgeordneten Entnahmestation zur Entnahme der Mehrschichttabletten mit n Schichten auszuwerfen und zu entnehmen. Es ist dann besonders vorteilhaft keine separate Entnahmestation für die Entnahme der Prüflinge erforderlich. Vielmehr kann die ohnehin bei der Presse vorgesehene letzte Entnahmestation verwendet werden.

Presslinge aus Matrizenlöchern, welche sich zum Zeitpunkt der Einleitung des Prüfvorgangs nicht zwischen der m-ten Fülleinrichtung und der m+1-ten Absaugeinrichtung befinden, können einem Schlechtkanal zugeleitet, also beispielsweise für eine Entsorgung aussortiert werden. Dazu kann in der Entnahmestation eine Weiche vorgesehen sein, die zu dem Schlechtkanal führt.

Vor der Entnahme der Presslinge wird zumindest die m-te Schicht stärker komprimiert als während der normalen Fertigung der Mehrschichttabletten, wobei m < n ist. Eine solche stärkere

Komprimierung kann durch eine Verringerung der Steghöhe erreicht werden. Durch eine stärkere Komprimierung werden die Prüflinge in eine Form gebracht, die eine problemlose Prüfung erlaubt. Sofern nur eine normale Vörpressung erfolgt, könnten die Prüflinge andernfalls zerfallen oder Material verlieren. Dies würde das Prüfergebnis verfälschen. Die stärkere Komprimierung der m-ten Schicht erfolgt in der m+1-ten oder einer nachfolgenden Pressstation. Bei dieser Ausgestaltung stehen mehr Presslinge für die Prüfung zur Verfügung, da auch solche Presslinge stärker komprimiert werden, die sich nach Einleitung des Prüfvorgangs bereits zwischen der m-ten Fülleinrichtung und der m+1-ten Pressstation befinden.

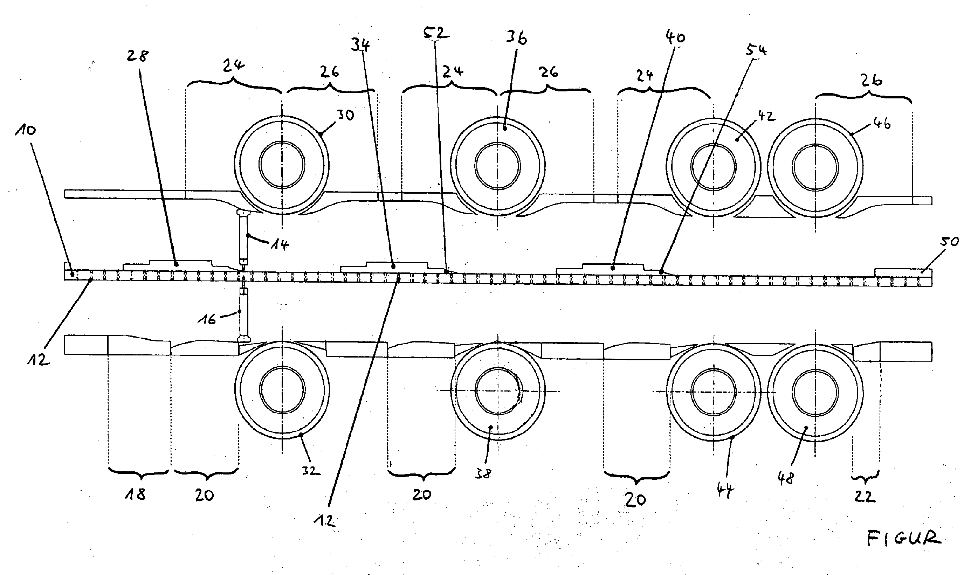

Ein Ausführungsbeispiel der Erfindung wird nachfolgend anhand einer Zeichnung näher erläutert. Die einzige Figur zeigt schematisch eine Mehrfachrundläuferpresse zur Durchführung des Verfahrens nach der Erfindung in einer seitlichen Ansicht.

Die Rundläuferpresse weist eine Matrizenscheibe 10 auf, die um eine vertikale Achse drehend angetrieben ist. Die Matrizenscheibe 10 verfügt über eine Reihe von durchgehenden Matrizenlöchern 12. Jedem Matrizenloch 12 ist ein Paar von Pressstempeln 14, 16 zugeordnet, von denen in der Figur aus Gründen der Übersichtlichkeit nur ein Paar dargestellt ist. Die oberen Pressstempel 14 sind axial beweglich in einer nicht näher dargestellten Scheibe gelagert, die synchron mit der Matrizenscheibe 10 angetrieben ist. In entsprechender Weise sind die unteren Pressstempel 16 in einer nicht näher dargestellten Scheibe axial beweglich gelagert, die ebenfalls synchron umläuft. Die axiale Position der Pressstempel 14, 16 wird bestimmt durch verschiedene Steuerkurven, mit denen die hinteren Enden der Pressstempel 14, 16 in an sich bekannter Weise zusammenwirken. In den Figuren schematisch dargestellt sind als untere Steuerkurven eine Füllkurve 18, Dosierkurven 20 sowie eine Auswerferkurve 22. Weiterhin dargestellt sind als obere Steuerkurven Niederdruckkurven 24 und Aufzugskurven 26. Die Ausgestaltung solcher Steuerkurven und ihr Zusammenwirken mit den Pressstempeln 14, 16 sind dem Fachmann an sich bekannt und werden daher nicht näher erläutert.

Im Folgenden wird zunächst der normale Betrieb der Presse zur Herstellung einer Dreischichttablette erläutert. In der Figur ist eine erste Füllstation mit einer ersten Fülleinrichtung 28 oberhalb der Matrizenscheibe 10 angeordnet. Über die Fülleinrichtung 28 wird pulverförmiges Tablettenmaterial für eine erste Schicht einer in der Presse herzustellenden Mehrschichttablette, vorliegend einer Dreischichttablette, in die vorbeilaufenden Matrizenlöcher 12 eingefüllt. Die Einfülltiefe wird bestimmt durch die Position der unteren Pressstempel 16, deren Position wiederum durch die Füll- und Dosierkurven 18, 20 unterer Steuerkurven bestimmt wird. Bewegt durch die Steuerkurven 18, 20 geben die unteren Pressstempel 16 die vorbeilaufenden Matrizenlöcher 12 allmählich frei. Die in der Fülleinrichtung 28 befüllten Matrizenlöcher 12 durchlaufen anschließend eine erste Pressstation mit oberen und unteren Pressrollen 30, 32, vorliegend Vordruckrollen 30, 32. Mit Hilfe der oberen Niederdruckkurve 24 wirken die oberen Pressstempel 14 mit den Matrizenlöchern 12 zusammen. Durch die Höhe der Vordruckrollen 30, 32 wird das Maß vorgegeben, um das die Füllung in den Matrizenlöchern 12 zusammengepresst wird. Die Höhe des auf diese Weise erhaltenen Presslings wird auch als Steghöhe bezeichnet.

Anschließend durchlaufen die Matrizenlöcher 12 eine zweite Fülleinrichtung 34, in der Tablettenmaterial für eine zweite Tablettenschicht in die Matrizenlöcher 12 auf die erste Schicht gefüllt wird, und eine der zweiten Fülleinrichtung 34 nachgeordnete zweite Pressstation mit wiederum oberen und unteren Pressrollen 36, 38, insbesondere Vordruckrollen 36, 38. In der zweiten Pressstation erfolgt durch die zweiten Vordruckrollen 36, 38 eine Komprimierung der zweiten Tablettenschicht in den Matrizenlöchern 12. Anschließend durchlaufen die Matrizenlöcher 12 mit den zwei Tablettenschichten eine dritte Fülleinrichtung 40, in der Tablettenmaterial einer dritten Schicht in die Matrizenlöcher 12 auf die bereits in den Löchern 12 befindlichen beiden Schichten aufgefüllt wird. Nach Durchlaufen dieser Fülleinrichtung 40 werden die Matrizenlöcher 12 durch eine dritte Pressstation geführt. Die dritte Pressstation weist eine Vordruckstation mit oberen und unteren Vordruckrollen 42, 44 sowie eine anschließende Hauptpressstation mit oberen und unteren Hauptdruckrollen 46, 48 auf. In der dritten Pressstation erfolgt die abschließende Verpressung der drei Materialschichten zu einem Pressling mit drei Tablettenschichten. Anschließend werden die Presslinge in den Matrizenlöchern 12 im Bereich der unteren Auswerferkurve 22, die die unteren Stempel 16 nach oben bewegt, aus den Matrizenlöchern 12 auf die Oberfläche der Matrizenscheibe 10 ausgestoßen. Mittels eines Abstreifers 50 können die Presslinge dann in an sich bekannter Weise einem nicht näher dargestellten Ablaufkanal zugeführt und von dort weiter verarbeitet werden. Der Abstreifer 50 bildet zusammen mit dem Ablaufkanal eine Entnahmestation.

Nachfolgend wird das erfindungsgemäße Verfahren zur Prüfung von Mehrschichttabletten, insbesondere ein Prüfvorgang zur Messung des Gewichts der ersten Schicht der Presslinge, beschrieben. Zur Einleitung des Prüfvorgangs wird zunächst die Matrizenscheibe 10 angehalten. Die Absaugeinrichtung 52 sowie eine zwischen der dritten Fülleinrichtung 40 und der dritten Pressstation angeordnete weitere Absaugeinrichtung 54 werden aktiviert. Insbesondere werden dabei Absaugdüsen der Absaugeinrichtungen 52, 54 in Gang gesetzt. Mittels der Absaugeinrichtungen 52, 54 wird in der zweiten und dritten Fülleinrichtung 34 ,40 in die Matrizenlöcher 12 gefülltes pulverförmiges Material abgesaugt, bevor dieses verpresst werden kann. Sofern eine stärkere Komprimierung der ersten Schicht gewünscht ist, wird die Matrizenscheibe 10 nach dem Stopp zunächst um die Anzahl Matrizenlöcher 12 weitergedreht, die sich zwischen einer nach der zweiten Fülleinrichtung 34 und vor der zweiten Pressstation angeordneten Absaugeinrichtung 52 und der zweiten Pressstation befinden. Anschließend wird die durch die zweiten Pressrollen 36, 38 gebildete Steghöhe in der gewünschten Weise verringert. Ein die zweite Pressstation durchlaufender Pressling wird somit stärker komprimiert als bei der im normalen Betrieb erfolgenden geringen Vorpressung.

Anschließend wird die Matrizenscheibe 10 wieder in Bewegung versetzt. Sie wird dabei insbesondere um die Anzahl Matrizenlöcher 12 weitergedreht, die sich zwischen der ersten Fülleinrichtung 28 und dem Abstreifer 50 befinden. Dabei wird nach der Einleitung des Prüfvorgangs in den zweiten und dritten Fülleinrichtungen 34, 40 zwar jeweils weiterhin Tablettenmaterial auf die Presslinge der ersten Schicht aufgefüllt. Dieses wird jedoch vor einer Verpressung von den Absaugeinrichtungen 52, 54 wieder abgesaugt. In der zweiten Pressstation wird außerdem der Pressling mit der ersten Schicht einer stärkeren Komprimierung ausgesetzt. Der Abstreifer 50 streift die an die Oberfläche der Matrizenscheibe 10 geförderten Presslinge jeweils in den nicht näher dargestellten Ablaufkanal ab.

Als Muster für einen Prüfvorgang werden vorliegend Presslinge aus den Matrizenlöcher 12 verwendet, die sich nach dem Stopp der Matrizenscheibe 10 zwischen der ersten Fülleinrichtung 28 und der der zweiten Fülleinrichtung 34 zugeordneten Absaugeinrichtung 52 befanden. Die Presslinge aus Matrizenlöchern 12, die sich zum Zeitpunkt des Stopps der Matrizenscheibe 10, also der Einleitung des Prüfvorgangs, zwischen der Absaugeinrichtung 52 und dem Abstreifer 50 befanden, werden mittels einer Weiche in dem Ablaufkanal einem Schlechtkanal zugeführt und aussortiert. Anschließend wird die Weiche so umgestellt, dass die dem Prüfvorgang zuzuleitenden Presslinge aus dem Ablaufkanal einer nicht näher dargestellten Prüfstation, vorliegend zur Gewichtsmessung, zugeführt werden.

Nachdem der letzte Pressling für den Prüfvorgang entnommen wurde, wird die Matrizenscheibe 10 wieder angehalten. Die Absaugeinrichtungen 52, 54 werden abgeschaltet, die Steghöhen werden in Betriebsposition gefahren und die Matrizenscheibe 12 wird wieder auf ihre normale Betriebsgeschwindigkeit beschleunigt. Mittels der Weiche in dem Ablaufkanal können dabei bis zum Erreichen des Normalbetriebs der Anlage ausgeworfene Presslinge aussortiert werden. Insbesondere werden erst wieder Presslinge für die normale Produktion verwendet, die unter den normalen Betriebsbedingungen hergestellt wurden.

Bei dem erfindungsgemäßen Verfahren wird die Anzahl der für einen Prüfvorgang zur Verfügung stehenden Musterpresslinge erhöht. Gleichzeitig wird sichergestellt, dass repräsentative Schichtmuster ohne Beeinflussung durch den Prüfvorgang geprüft werden. Darüber hinaus ist bei der beschriebenen Ausgestaltung des Verfahrens kein separater Schichtauswerfer zum Entnehmen der zu prüfenden Presslinge erforderlich. Vielmehr kann die ohnehin in der Presse vorgesehene Entnahmestation mit dem Abstreifer 50 zu diesem Zweck genutzt werden.

## Patentansprüche

1. Verfahren zum Prüfen von Mehrschichttabletten in einer Mehrfachrundläuferpresse, in der Matrizenlöcher (12) einer umlaufenden Matrizenscheibe (10) in aufeinander folgenden Fülleinrichtungen (28, 34, 40) sukzessive mit Tablettenmaterial unterschiedlicher Schichten befüllt werden, und das Tablettenmaterial in den Fülleinrichtungen (28, 34, 40) jeweils zugeordneten Pressstationen mittels synchron umlaufender Pressstempel Schicht auf Schicht zu Presslingen mit n Schichten verpresst wird und die Presslinge anschließend in einer Entnahmestation (50) ausgeworfen und entnommen werden,
bei dem in einem Prüfvorgang Presslinge mit m Schichten nach dem Verpressen in einer Entnahmestation (50) entnommen und einer Prüfstation zugeleitet werden, wobei 1 <= m < n ist,
wobei nach Einleitung des Prüfvorgangs Matrizenlöcher (12) mit Presslingen mit m Schichten nach dem Verpressen der m-ten Schicht die m+1-te Fülleinrichtung (34) durchlaufen und dort Tablettenmaterial der m+1-ten Schicht auf die in den Matrizenlöcher (12) befindlichen Presslinge gefüllt wird, und
wobei das Tablettenmaterial der m+1-ten Schicht anschließend mittels einer nach der m+1-ten Fülleinrichtung (34) und vor der m+1-ten Pressstation angeordneten Absaugeinrichtung (52) aus den die Presslinge mit m Schichten enthaltenden Matrizenlöchern (12) abgesaugt wird,
**dadurch gekennzeichnet,**
**dass** vor der Entnahme der Presslinge zumindest die m-te Schicht in der m+1-ten Pressstation oder einer nachfolgenden Pressstation stärker komprimiert wird als während der normalen Fertigung der Mehrschichttabletten, wobei m < n ist, und
**dass** der Prüfstation nur Presslinge aus Matrizenlöchern (12) zugeführt werden, welche sich zum Zeitpunkt der Einleitung des Prüfvorgangs zwischen der m-ten Fülleinrichtung (28) und der Absaugeinrichtung (52) befinden.

2. Verfahren nach Anspruch 1, **dadurch gekennzeichnet, dass** in der Prüfstation das Gewicht der Presslinge gemessen wird.

3. Verfahren nach einem der Ansprüche 1 oder 2, **dadurch gekennzeichnet, dass** die Matrizenscheibe (12) zur Einleitung des Prüfvorgangs und/oder zur Beendigung des Prüfvorgangs angehalten wird.

4. Verfahren nach einem der vorhergehenden Ansprüche, **dadurch gekennzeichnet, dass** während des Prüfvorgangs Tablettenmaterial aus sämtlichen der m+1-ten Fülleinrichtung (34) nachfolgenden Fülleinrichtungen (40) mittels den Fülleinrichtungen (40) jeweils zugeordneten Absaugeinrichtungen (54) abgesaugt wird.

5. Verfahren nach einem der vorhergehenden Ansprüche, **dadurch gekennzeichnet, dass** die Prüflinge in einer der n-ten Pressstation (42, 44, 46, 48) nachgeordneten Entnahmestation (50) zur Entnahme der Mehrschichttabletten mit n Schichten ausgeworfen und entnommen werden.

6. Verfahren nach einem der vorhergehenden Ansprüche, **dadurch gekennzeichnet, dass** Presslinge aus Matrizenlöchern (12), welche sich zum Zeitpunkt der Einleitung des Prüfvorgangs nicht zwischen der m-ten Fülleinrichtung (28) und der Absaugeinrichtung (52) befinden, einem Schlechtkanal zugeleitet werden.

## Claims

1. A method for testing multi-layer tablets in a multiple rotary press, in which die holes (12) of a circulating die table (10) are successively filled with tablet material having different layers in consecutive filling devices (28, 34, 40), and the tablet material is compacted layer after layer to pressed parts having n layers by means of synchronously circulating punches in compression stations respectively associated to the filling devices (28, 34, 40), and the pressed parts are subsequently ejected and withdrawn in a withdrawal station (50),
wherein in a testing procedure, pressed parts having m layers are withdrawn in a withdrawal station (50) after having been compacted, and are fed to a testing station, in this procedure being 1 <=m<n,
wherein after starting the testing procedure, die holes (12) with pressed parts having m layers pass through the (m+1)^{th} filling device (34) after the m^{th} layer has been compacted, and tablet material of the (m+1)^{th} layer is filled there onto the pressed parts present in the die holes (12), and
wherein the tablet material of the (m+1)^{th} layer is subsequently suctioned out of the die holes (12) containing the pressed parts having m layers by means of a suction device (52) arranged after the (m+1)^{th} filling device (34) and before the (m+1)^{th} compression station, **characterised in that**
before the withdrawal of the pressed parts, at least the m^{th} layer in the (m+1)^{th} compression station or a consecutive compression station is compressed stronger than during the normal production of the multi-layer tablets, wherein holds m < n, and
that only such pressed parts are fed to the testing station from such die holes (12) which are present between the m^{th} filling device (28) and the suction device (52) at the moment when the testing procedure is being started.

2. The method according to claim 1, **characterised in that** the weight of the pressed parts is measured in the testing station.

3. A method according to one of claims 1 or 2, **characterised in that** the die table (12) is stopped in order to start the testing procedure and/or to end the testing procedure.

4. A method according to any one of the preceding claims, **characterised in that** during the testing procedure, tablet material of all the filling devices (40) that follow after the (m+1)^{th} filling device (34) is suctioned off by means of suction devices (54) associated to the respective filling devices (40).

5. A method according to any one of the preceding claims, **characterised in that** the parts to be tested are ejected and withdrawn in a withdrawal station (50) for the withdrawal of the multi-layer tablets having n layers which is arranged after the n^{th} compression station (42, 44, 46, 48).

6. A method according to any one of the preceding claims, **characterised in that** pressed parts from such die holes (12) which are not present between the m^{th} filling device (28) and the suction device (52) at the moment when the testing procedure is being started, are fed to a channel for defective parts.

## Revendications

1. Procédé pour tester des comprimés à couches multiples, dans une presse multiple à table tournante, dans laquelle des trous de matrice (12) d'un disque à matrice circulant (10) sont successivement remplis avec de la matière pour comprimé de couches différentes dans des dispositifs de remplissage consécutifs (28, 34, 40), et la matière pour comprimé est compactée couche après couche à des pièces pressées avec n couches au travers de poinçons circulants de façon synchrone dans des stations de compression respectivement associées aux dispositifs de remplissage (28, 34, 40), et les pièces pressées sont ensuite éjectées et prélevées dans une station de prélèvement (50),
dans une procédure de test, des pièces pressées avec m couches sont prélevées dans une station de prélèvement (50) après avoir été compactées, et sont transmis à une station de test, dans cette procédure étant 1 <=m<n,
après le commencement de la procédure de test, des trous de matrice (12) avec pièces pressées avec m couches passent à travers le (m+1)ième dispositif de remplissage (34) après la compaction de la mième couche, et là-dedans, de la matière pour comprimé de la (m+1)ième couche est remplie au-dessus des pièces pressées présentes dans les trous de matrice (12), et
la matière pour comprimé de la (m+1)ième couche est ensuite aspirée des trous de matrice (12) qui contiennent les pièces pressées avec m couches au travers d'un dispositif aspirateur (52) arrangé après le (m+1)ième dispositif de remplissage (34) et avant la (m+1)ième station de compression,
**caractérisé en ce que**
avant le prélèvement des pièces pressées, au moins la mième couche dans la (m+1)ième station de compression ou une station de compression suivante est comprimée plus fortement que pendant la production normale des comprimés à couches multiples, avec m < n, et
que seulement telles pièces pressées sont transmis à la station de test à partir de tels trous de matrice (12) qui se trouvent entre le mième dispositif de remplissage (28) et le dispositif aspirateur (52) au moment du commencement de la procédure de test.

2. Procédé selon la revendication 1, **caractérisé en ce que** le poids des pièces pressées est mesuré dans la station de test.

3. Procédé selon une des revendications 1 ou 2, **caractérisé en ce que** le disque à matrice (12) est arrêté pour le commencement de la procédure de test et/ou pour finir la procédure de test.

4. Procédé selon l'une quelconque des revendications précédentes, **caractérisé en ce que** pendant la procédure de test, de la matière pour comprimé des tous les dispositifs de remplissage (40) en suite du (m+1)ième dispositif de remplissage (34) est aspiré au travers de dispositif aspirateurs (54) associés aux dispositifs de remplissage (40) respectifs.

5. Procédé selon l'une quelconque des revendications précédentes, **caractérisé en ce que** les échantillons sont éjectés et prélevés dans une station de prélèvement (50) pour le prélèvement des comprimés à couches multiples avec n couches qui est arrangée derrière la nième station de compression (42, 44, 46, 48).

6. Procédé selon l'une quelconque des revendications précédentes, **caractérisé en ce que** des pièces pressées à partir des tels trous de matrice (12) qui ne se trouvent pas entre le mième dispositif de remplissage (28) et le dispositif aspirateur (52) au moment du commencement de la procédure de test, sont transmis à un canal pour pièces défectives.
